# DEMANDE DE BREVET EUROPEEN

(11) **EP 1 225 017 A1**
(43) Date de publication de la demande: **24.07.2002**
(21) Numéro de dépôt: 01480005.6
(22) Date de dépôt: 18.01.2001
(51) Int. Cl.: B28C 5/42, B60P 3/16

(54) **Malaxeur horizontal monté sur camion avec déchargement à hauteur variable**

(71) Demandeur: Lambert, Didier Gervais, 06650 Le Rouret (FR)
(72) Inventeur: Lambert, Didier Gervais, 06650 Le Rouret (FR)

(57) **Abrégé**

L'invention concerne un véhicule permettant le malaxage à l'horizontal de matériaux stabilisés. Comparé à une transport conventionnel, le centre de gravité est de ce fait abaissé au maximum par rapport au châssis du camion.

La variation de hauteur de déchargement est assurée de façon compensée par deux vérins arrière et un vérin avant.

Le véhicule est constitué d'une cuve cylindrique (1) en position horizontale, surmontée d'un couvercle en dôme (25) à l'intérieur duquel est fixée une araignée à pas variable (fig.6), entraînée par un moto réducteur (13).

## Description

La présente invention concerne un véhicule pour malaxer horizontalement des matériaux chargés sous centrale ou ravitaillés par des malaxeurs conventionnels et pour décharger ces matériaux à une hauteur variable selon le besoin exprimé sur le chantier.

Traditionnellement, les matériaux sont malaxés dans des malaxeurs conventionnels, « toupies », chargés sous centrale. Ces matériaux sont malaxés dans des cuves cylindriques équipées d'une vis sans fin horaire ou anti-horaire.

Le déchargement s'effectue en inversant le sens de rotation de chargement.

Ces « toupies » présentent l'inconvénient d'avoir un centre de gravité élevé entraînant une gêne pour la tenue de route, ne leur permettant pas de prendre des chemins aux dévers importants et de livrer des chantiers peu accessibles.

La hauteur routière de ces « toupies » est souvent à la limite autorisée par le code de la route.

Le véhicule selon l'invention permet de remédier à ces inconvénients.

Il comporte en effet selon une première caractéristique une cuve cylindrique en position horizontale par rapport au châssis, ouverte sur le dessus, surmontée d'un dôme dont l'ouverture est commandée par deux vérins hydrauliques articulés, fermant la cuve de façon étanche par recouvrement.

De part sa position horizontale, le chargement de matériaux se retrouve stabilisé et de ce fait le centre de gravité est abaissé au maximum par rapport au châssis du camion, contrairement aux « toupies » conventionnelles.

Le véhicule selon l'invention permet deux systèmes de déchargement :
- Élévation du vérin avant suffisante pour permettre l'écoulement des matériaux dès l'ouverture de la guillotine de déchargement.
- Si la situation de livraison sur le chantier exige l'élévation du point de livraison, l'utilisateur actionne les vérins arrière et compense l'élévation arrière en actionnant le vérin avant.

La durée de déchargement pour 1,5^{m3} ne dépasse pas une minute et demi.

Le principe de malaxage est basé sur un système d'araignée à pas variable fixée à l'intérieur du couvercle en dôme entraînée par un moto réducteur hydraulique.

Contrairement aux « toupies » conventionnelles, aucun transfert de masse ne s'effectue et par conséquent aucune incidence routière ne se produit.

Le véhicule fermé, même si sa capacité est augmentée pour l'adapter à d'autres camions, ne dépassera pas la cabine du camion en position route.

Les dessins annexés illustrent l'invention :

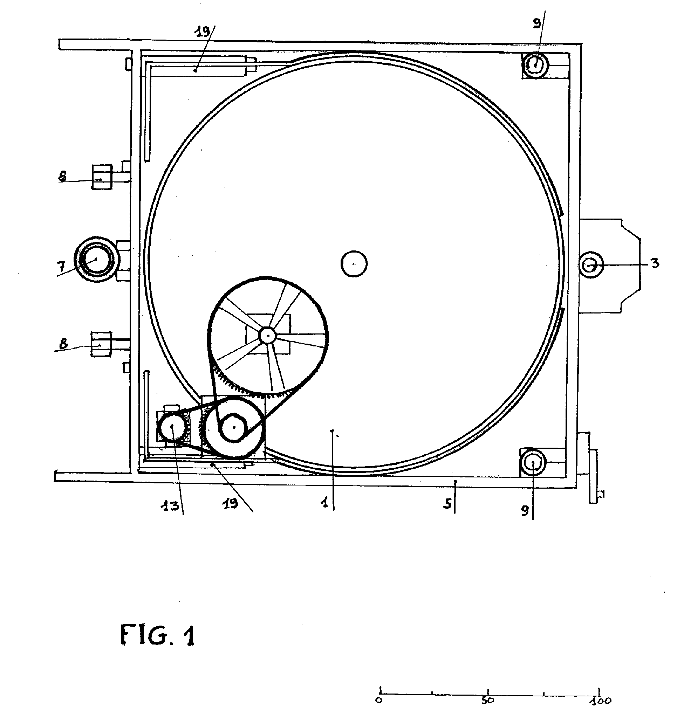

La figure 1 représente en plan la cuve cylindrique (1) dans son châssis (5) avec son système d'entraînement par moto réducteur hydraulique (13) et l'ensemble des vérins (3-7-9-19).

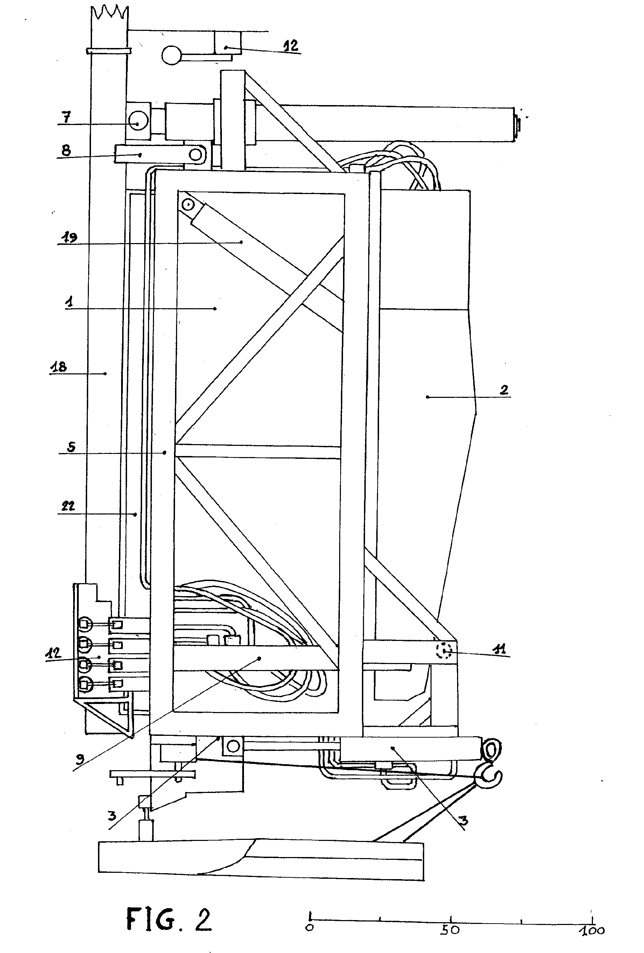

La figure 2 représente la face latérale du véhicule.

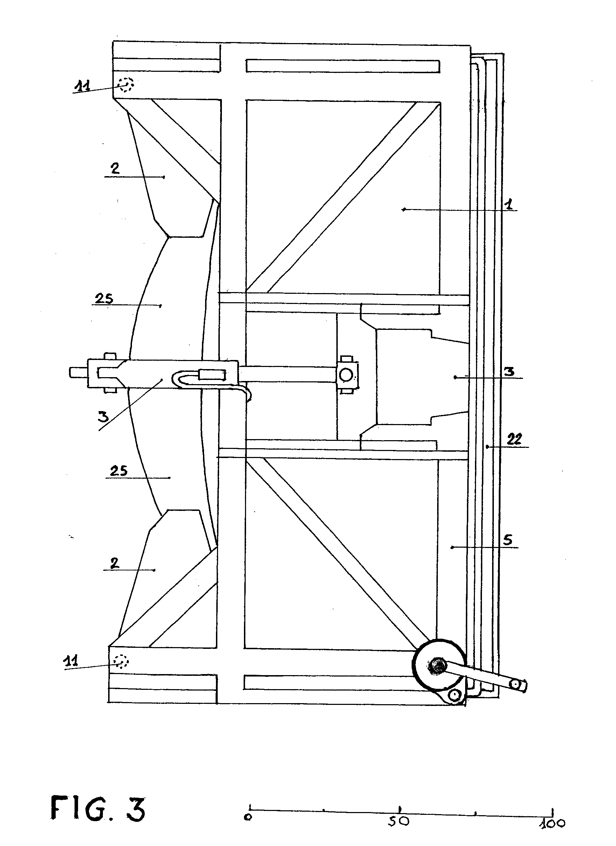

La figure 3 représente la face arrière du véhicule avec la cuve (1), la joue du dôme (2), le dôme (25), la guillotine (3), le châssis coque (5),les têtes de vérins(11), le HPN(22).

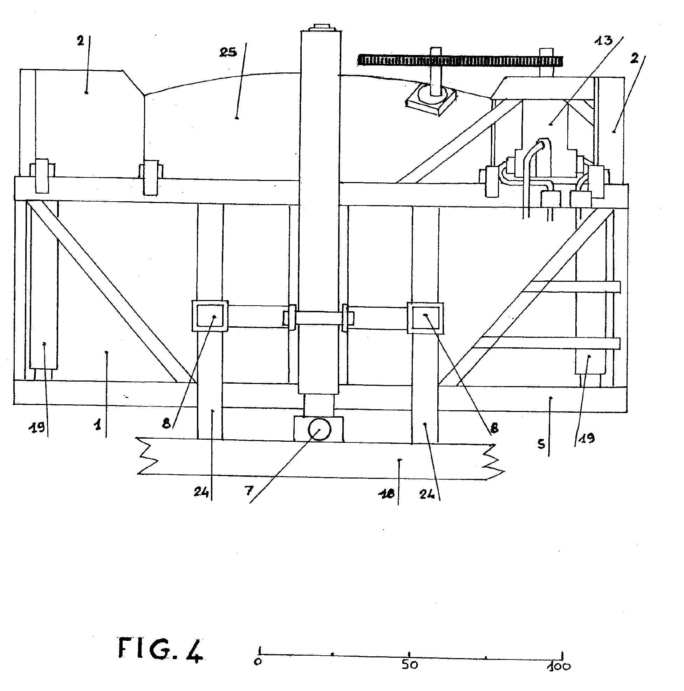

La figure 4 représente la vue avant du véhicule avec la cuve (1), la joue du dôme (2), le dôme (25), le châssis coque (5), le vérin avant (7), la charnière (8), le moto réducteur (13), le châssis mère du camion (18), les vérins arrière (19) et les plaques de renfort (24).

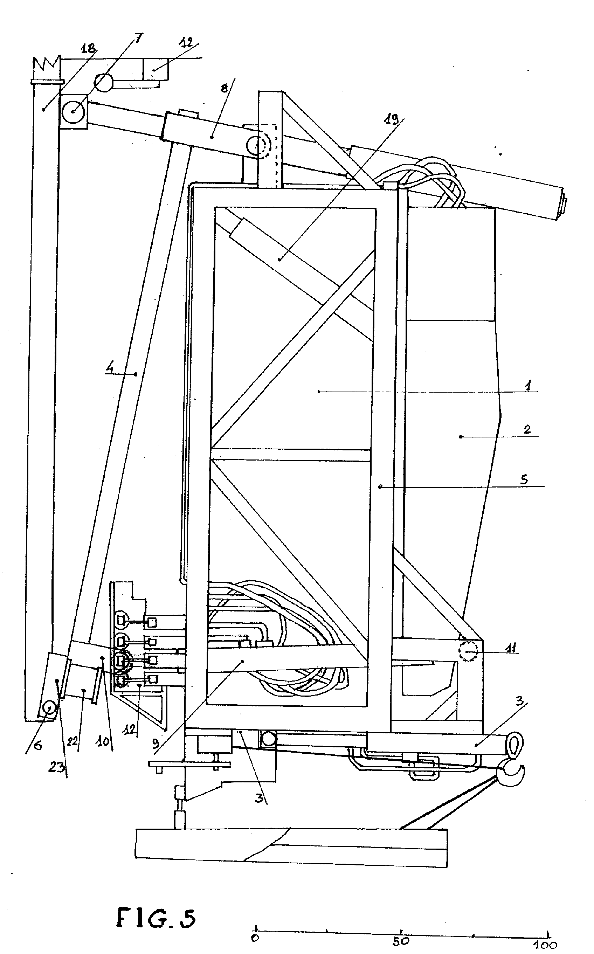

La figure 5 représente la vue latérale du véhicule en position haute avec la cuve (1), la joue du dôme (2), la barre d'effort (4), le châssis coque (5), les axes d'articulation (6), le vérin avant articulé (7), la charnière de liaison de la cuve (8), les vérins arrière (9) et le pied des vérins (10), les têtes des vérins (11), les manettes (12), le châssis mère du camion (18) et les vérins hydrauliques articulés (19) commandant l'ouverture du couvercle en dôme, le HPN (22).
La figure 6 représente l'intérieur du dôme (25) constitué de l'araignée à pas variable.

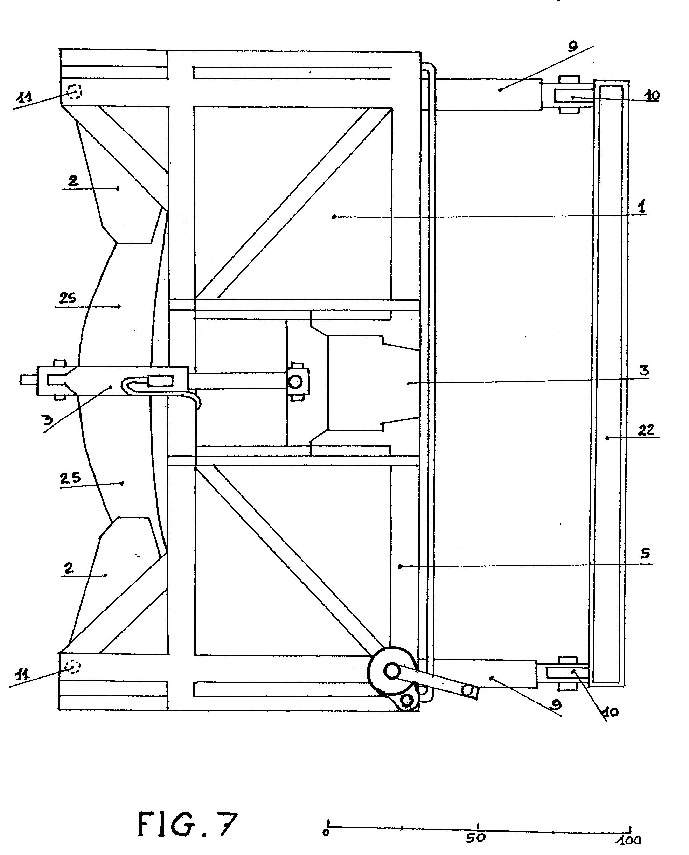

La figure 7 représente la vue arrière du véhicule en position haute.

En référence à ces dessins, le véhicule comporte une cuve cylindrique (1) en position horizontale par rapport au châssis du camion, qui se ferme à l'aide d'un couvercle en dôme (25) dont l'ouverture est commandée par deux vérins articulés (19) permettant l'étanchéité constante de la cuve jusqu'à 45° d'inclinaison.

La cuve (1) est pourvue à l'arrière d'une ouverture fermée par une guillotine (3) hydraulique actionnée par un vérin qui est en position ouverte pour le déchargement ou en position fermée pour la route.

La cuve (1) est posée sur une barre d'effort (4) et constitue elle-même le châssis coque (5).

La barre d'effort (4) est fixée à l'arrière par deux axes (6) au châssis mère du camion (18) (type axe de benne). A l'avant, elle est solidarisée par un vérin articulé (7) pris sur le châssis mère du camion (18).

La cuve (1) est solidarisée à l'avant avec la barre d'effort (4) par une charnière (8). Elle est maintenue par deux vérins à l'arrière (9). Les pieds de vérins (10) sont pris sur la barre d'effort (4) et les têtes des vérins double effet (11) sont prises sur la cuve (1) constituant la deuxième partie du châssis (5).

Les pieds des vérins (10) sont montés sur rotule.

L'élévation des vérins arrière (9) est commandée par des manettes différentes (12) et non pas en tandem afin de pouvoir corriger l'assiette de la cuve (1) et compenser le dévers du terrain.

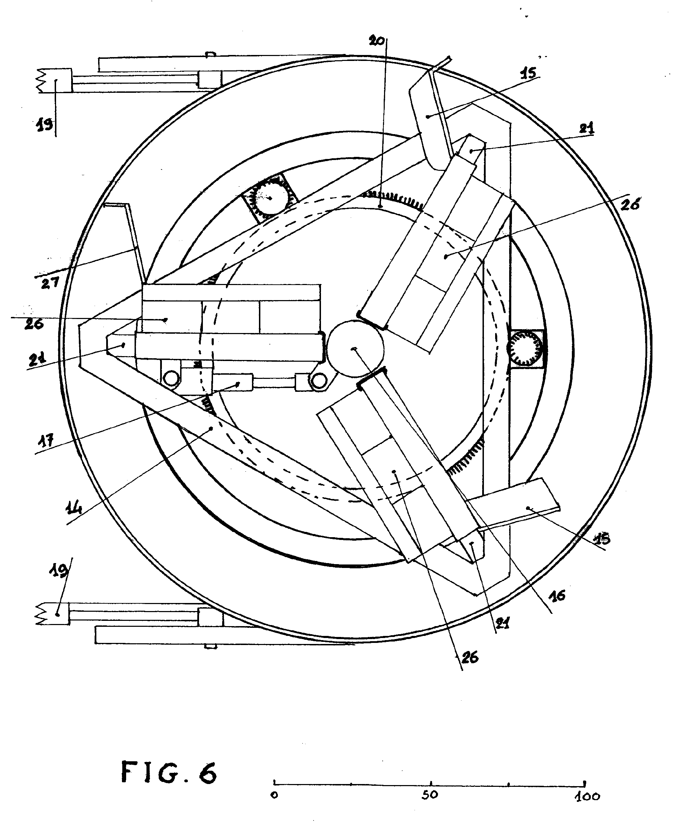

Le mécanisme de l'araignée (fig.6) permettant le malaxage du produit est constitué d'un triangle (14) à pan incliné supportant 2 pales fixes (15) et une pale mobile (27) montées sur un moyeu (16) compensées par un amortisseur (17) permettant, dans le sens horaire, de mettre les pales en drapeau. En inversant le sens, les pales s'ouvrent et se mettent en position de déchargement automatiquement. Les pales sont situées en bout de bras de l'araignée et se retrouvent en position d'attaque optimale pour le déchargement.

Ce principe permet d'obtenir un indice de pénétration limitant l'effort mécanique dans le matériau transporté.

Selon une variante non illustrée, le mécanisme de l'araignée peut être fixé au sol de la cuve cylindrique (1). En mettant deux ou trois cuves les unes derrière les autres, avec un passage de l'une à l'autre, on peut augmenter la quantité de matériau livrée. Dans ce cas, les sens de rotation des araignées seront supra divergentes (inversées) l'une par rapport à l'autre.

Selon un mode de réalisation :

La présente invention concerne un malaxeur horizontal porté par un camion de type « UNIMOG 416 BTL », destiné à abaisser le centre de gravité du chargement et à permettre de se faire ravitailler par des malaxeurs conventionnels, « toupies ».

Le châssis coque (5) qui est carré, supporte une cuve cylindrique (1) surmontée d'un dôme (25) utilisé comme fond de cuve dans l'industrie.

Le châssis coque (5) (2m x 2m) est constitué de profilés de 80 x 40 pour l'ossature et de 40 x 40 pour les contre équerrages afin qu'on ait toujours une face se retrouvant dans les dimensions de l'autre.

La guillotine (3) qui ferme l'ouverture de déchargement est fixée à l'arrière sur le châssis, elle est actionnée par un vérin hydraulique (3).

Un camion UNIMOG n'a pas un châssis conventionnel mais un double châssis flottant permettant des croisements de ponts importants.

La première phase de montage a consisté à poser à l'arrière du camion un HPN 200 (22) de 2m de longueur pouvant supporter une charge de 2,5 T avec un porte-à-faux de 50 cm par rapport au châssis. Cet HPN posé à l'équerre au travers du châssis, est solidaire de 2 chapes (23) qui épousent les axes d'articulation de benne du camion, qui ont 35mm de diamètre (6).

Ces axes (6) ont pour vocation de relier le HPN (22) par l'intermédiaire des chapes (23) au châssis du camion (18). Les articulations arrières seront reliées à l'articulation avant par une barre d'effort (4) de 60 x 30 consolidée par un fer plat de 60 x 20 destiné à gagner de la rigidité.

La barre d'effort (4) sera reliée à l'avant avec le châssis coque (5) par 2 charnières de liaison en mécano soudé (8), de 80 x 5 et de 30 cm de hauteur entre son axe de rotation et le bas de la barre d'effort (4).

Ces charnières dépassent la barre d'effort de 5cm, ce qui permet lorsque le véhicule est en position basse, donc en circulation, d'enserrer le châssis du camion et par-là même d'empêcher tout mouvement latéral du châssis coque.

Les charnières (8) sont fixées sur des plaques de renfort de 80 x 5 (24) qui relient les parties hautes et basses du châssis coque.

Pour élever le châssis coque, l'inventeur a utilisé à l'avant un vérin articulé (7), à 3 étages, à simple effet. Le pied du vérin monté sur rotule est pris sur le châssis du camion (18) et la partie montante du vérin est fixée sur le châssis coque (5) par ses fixations d'origine.

A l'arrière, 2 vérins à double effet (9) sont utilisés. Ces vérins (9) sont fixés à l'HPN (22) par 2 chapes (10) et au châssis coque (5) par 2 rotules (11). La manoeuvre des vérins est commandée par un tiroir hydraulique manuel équipé de clapets de non-retour.

La cuve (1) repose sur une tôle de 5 mm supportée par des traverses de 40 x 40 renforcées par des fers plats de 40 x 40. Ces traverses sont disposées perpendiculairement à l'axe du camion tous les 33 cm.

Pour maintenir la cuve (1), 3 cercles de 185cm de diamètre, de 80 x 5, ont été soudés sur la tôle de 5mm, sur le châssis coque (5) à 35 cm et à 75cm de hauteur.

Pour fabriquer la cuve (1), une tôle de 2,5mm d'épaisseur a été utilisée en l'appliquant contre les cercles dans le but de lui faire prendre le cintre.

La tôle a été pré-roulée, pointée et soudée afin de la rendre étanche.

Le fond de cuve de 190cm de diamètre est contre équerré et renforcé par une joue en tôle (2) de 3mm pour éviter la déformation lors du relevage.

La joue (2) est soudée en galbe et suit la courbe du dôme (25).

Le dôme (25) est maintenu à l'avant par 4 charnières de 50 x 30 percées aux extrémités et clavetées.

Pour soulever le dôme, nous avons à l'avant 2 vérins (19) inclinés à 45° vers l'arrière, commandés par le tiroir hydraulique (12).

L'intérieur du dôme est constitué de l'araignée à pas variable.

Au centre un moyeu (16), à l'extérieur un triangle de 80 x 40 (14) relié au moyeu (16) par une cornière en étoile de 70 x 70 (21). Sur ce triangle est fixée une roue dentée (20) entraînée par un moto réducteur (13).

2 pales (15) sont soudées en bout des cornières en étoile, la 3^{ème} (27) est mobile. Pour faciliter le travail des pales, 3 ailerons métalliques (26) sont soudés sur les cornières en étoile (21).

Enfin, un amortisseur de compensation (17) est fixé entre le moyeu (16) et la pale mobile (27).

Le véhicule selon l'invention est particulièrement destiné à la livraison de béton prêt à l'emploi sur des chantiers peu accessibles et terrains accidentés.

| INDEX DES NUMEROS DE REFERENCE | |
|---|---|
| N° de référence | SIGNIFICATIONS |
| 1 | Cuve cylindrique |
| 2 | Joue du dôme |
| 3 | Guillotine hydraulique de déchargement |
| 4 | Barre d'effort |
| 5 | Châssis coque |
| 6 | Axes d'articulation |
| 7 | Vérin avant |
| 8 | Charnières de liaison de la cuve |
| 9 | Vérins arrière |
| 10 | Pieds des vérins arrière (chapes) |
| 11 | Têtes de vérins arrière (rotules) |
| 12 | Tiroir hydraulique (manettes) |
| 13 | Moto réducteur hydraulique |
| 14 | Triangle de l'araignée à pas variable |
| 15 | Pales fixes |
| 16 | Moyeu |
| 17 | Amortisseurs |
| 18 | Châssis mère du camion |
| 19 | Vérins arrière (pour ouverture du dôme) |
| 20 | Roue dentée |
| 21 | Cornière en étoile |
| 22 | HPN |
| 23 | Chapes |
| 24 | Plaques de renfort |
| 25 | Dôme |
| 26 | Ailerons métalliques |
| 27 | Pale mobile |

## Revendications

1. Véhicule pour malaxer horizontalement des matériaux et les décharger à une hauteur variable selon le besoin, **caractérisé en ce qu'**il est constitué d'une cuve cylindrique (1) en position horizontale comprenant une araignée à pas variable (fig.6).

2. Véhicule selon la revendication 1 **caractérisé en ce que** la cuve cylindrique (1) est surmontée d'un couvercle en dôme (25) dont l'ouverture est commandée par deux vérins articulés (19) permettant l'étanchéité constante de la cuve jusqu'à 45° d'inclinaison.

3. Véhicule selon la revendication 1 **caractérisé en ce que** le déchargement du produit malaxé s'effectue par une ouverture, fermée par une guillotine hydraulique (3) commandée manuellement.

4. Véhicule selon l'une quelconque des revendications précédentes **caractérisé en ce que** le phénomène de transfert de masse en position route et sur terrain accidenté est annulé, résultant de l'abaissement du centre de gravité par rapport au châssis du camion. Le chargement reste centré selon les normes « constructeur » du camion.

5. Véhicule **caractérisé en ce que** la variation de hauteur du déchargement est assurée de façon compensée par deux vérins arrière (9) et un vérin avant (7) commandés manuellement à l'aide d'un tiroir hydraulique (12)
